# EUROPÄISCHE PATENTSCHRIFT

(11) **EP 0 310 997 B1**
(45) Veröffentlichungstag und Bekanntmachung des Hinweises auf die Patenterteilung: **10.08.1994**
(21) Anmeldenummer: 88116363.8
(22) Anmeldetag: 04.10.1988
(51) Int. Cl.: B60G 11/32, B60G 17/00, F16F 6/00, F16F 15/03

(54) **Elektromagnetische Abstützanordnung**
Electromagnetic support
Support électromagnétique

(30) Priorität: 09.10.1987 DE 3734287
(43) Veröffentlichungstag der Anmeldung: 12.04.1989
(73) Patentinhaber: Kessler, Manfred, Dipl.-Ing., D-56220 Urmitz (DE)
(72) Erfinder: Kessler, Manfred, Dipl.-Ing., D-56220 Urmitz (DE)
(74) Vertreter: Reinhard - Skuhra - Weise & Partner

(56) Entgegenhaltungen:
- EP-A- 0 230 626
- DE-A- 2 442 118
- GB-A- 974 578
- PATENT ABSTRACTS OF JAPAN, Band 6, Nr. 124 (M-141)[1002], 9. Juli 1982; & JP-A-57 51 039 (RICOH K.K.) 25-03-1982

## Beschreibung

Die Erfindung betrifft allgemein eine elektromagnetische Abstützanordnung und bezieht sich insbesondere auf eine Anwendung dieser speziellen elektromagnetischen Abstützanordnung für Radaufhängungen von Fahrzeugfahr- bzw. -laufwerken. Eine derartige Abstützanordnung gemäß dem Oberbegriff des Anspruchs 1 ist z.B. aus DE-A-2 442 118 bekannt.

Für die Kraftentwicklung in einem magnetischen Feld sind drei verschiedene physikalische Effekte bekannt, erstens die Kräfte zwischen Stromleitern, zweitens die Kräfte zwischen Stromleitern und magnetischen Stoffen und drittens die Kräfte an den Grenzflächen von Stoffen verschiedener Permeabilität. Im Grundprinzip lassen sich diese physikalischen Effekte auf die Kräfte zwischen bewegten Ladungen zurückführen.

In der GB-A-974 578 ist eine elektromagnetische Abstützanordnung zur Abstützung der Regelstange einer Einspritzpumpe gegen Kräfte offenbart, die die Regelstange zu Schwingungen anregen. Diese vorbekannte elektromagnetische Abstützanordnung weist einen Stator mit einer stromdurchflossenen Wicklung und einen Läufer für geradlinige Läuferbewegungen mit zwei permeablen Läufereisenabschnitten auf, wobei der Erregerstrom für die Statorwicklung regelbar ist. Als nachteilig ist bei dieser Anordnung anzusehen, daß die aus der elektromagnetischen Anordnung resultierende Kraft aus dem Prinzip der sich anziehenden entgegengesetzten Pole resultiert und in Feldlinienrichtung wirkt, wobei sich die gegenüberliegenden Pole anziehen. In ungünstiger Weise ist die Größe der Kraft dabei abhängig von der Länge der in Luft verlaufenden Magnetfeldlinien, woraus sich eine starke nichtlineare Kraft-Weg-Abhängigkeit ergibt, die den Einsatz dieser vorbekannten Abstützanordnung für die Verwirklichung von linearen Stützkraftkennlinien ausschließt.

Zur Ausnutzung der Kräfte an den Grenzflächen von Stoffen verschiedener Permeabilität ist es bereits bei elektromagnetischen Schaltgeräten, Schützen, Relais und dergleichen bekannt, daß die Grenzfläche, an der die Kraft angreift, senkrecht zur Feldrichtung verläuft. Die Bewegung des Eisenkerns bzw. Läufers erfolgt dabei in Feldrichtung. Aufgrund des Umstandes, daß die Länge des in Luft verlaufenden Feldlinienweges bei Bewegungsbeginn mindestens gleich der gesamten Bewegungslänge ist, wird der Hauptteil des Stromes in der erregenden Feldspule für den Aufbau des magnetischen Feldes im Luftspalt benötigt. Hierdurch wird in nachteiliger Weise nur eine geringe magnetische Induktion erzielt, so daß die Zugkraft bei Bewegungsbeginn und damit die Läuferbeschleunigung gering ist.

Um diese Anfangswerte zu verbessern, muß der Strom in der Feldspule entsprechend gesteigert werden. Gegen Ende der begrenzten Bewegung des Eisenkerns bzw. Läufers ergeben sich wegen des kleinen Luftspaltes die größten Werte für die Zugkraft und die Beschleunigung. Ungünstig ist ferner, daß derartige Systeme sich wegen der erforderlichen hohen Ströme stark erwärmen.

Als nachteilig ist ferner anzusehen, daß diese vorbekannten Systeme nur feste nichtlineare Kraft-Weg-Kennlinien aufweisen und sich demgemäß weder für einen Einsatz bei Anwendungsfällen eignen, bei denen einer linearer Zusammenhang zwischen Kraft und Bewegungsweg erforderlich ist, noch für solche Anwendungsfälle, bei denen eine willkürlich steuerbare Kraft-Bewegungsweg-Kennlinie günstig ist. Für den letztgenannten Anwendungsbereich kommen beispielsweise Maschinenlagerungen mit dynamischer Belastung in Frage.

In den Bereich von Fahrzeugfahr- bzw. -laufwerken geht es bei abstützenden Radaufhängungen um einen hohen Fahrkomfort und eine hohe Fahrsicherheit, wobei verschiedene Beladungs- und Fahrsituationen, die bei Fahrzeugen zu unterschiedlichen Bewegungsformen wie Rollen, Wanken usw. führen, möglichst vollständig kompensiert werden sollen.

Fahrzeuge werden durch Fahrbahn- bzw. Schienenunebenheiten zu Schwingungen angeregt, die den Fahrkomfort und die Fahrsicherheit verschlechtern. Der Schwingungsaufbau erfolgt in sechs Freiheitsgraden. Von besonderer Bedeutung sind das Hubschwing-, das Nickschwing- und das Wankschwingverhalten des Fahrzeugs.

Der Fahrkomfort des Fahrzeugs wird zwar durch eine weiche Federung erhöht. Weich gefederte Fahrzeuge zeigen jedoch vor allem bei unbeladenen Fahrzustand, bei Kurvenfahrten, beim Anfahren und beim Bremsen unangenehme Schwingungseigenschaften und bergen Sicherheitsrisiken. Dies gilt besonders für Fahrzeuge, die aufgrund des Leichtbaues einen großen Gewichtsunterschied zwischen leerem und vollbeladenem Zustand aufweisen.

Für den Fahrkomfort ist insbesondere die vertikale Aufbaubeschleunigung (Hubschwingungen) von Bedeutung, wobei bei einer weicheren Federung kleinere Aufbaubeschleunigungen auftreten als bei einer härteren Federung. Andererseits ist es auch erforderlich, daß Federbewegungen durch Schwingungsdämpfer gedämpft werden, wobei sich eine große Schwingungsdämpferkraft nachteilig auf den Fahrkomfort auswirkt. Die Abstimmung der Federung und der Schwingungsdämpfung läßt sich zwar hinsichtlich des Fahrkomforts optimieren. Diese Optimierung steht jedoch nicht im Einklang mit den Forderungen an Fahrsicherheit. Für die Fahrsicherheit ist die Änderung der Radlast während der Fahrt maßgebend. Kleine dynamische Radlastschwingungen erreicht man durch große Schwingungsdämpferkräfte, kleine Achsmasse und weiche Reifen. Eine weiche Federung und weiche Reifen dürfen jedoch das Fahrverhalten in der Kurve, beim Anfahren und Abbremsen nicht beeinträchtigen. Demgemäß stellt bisher die Abstimmung von Federung und Schwingungsdämpfung einen Kompromiß zwischen Fahrkomfort und Fahrsicherheit dar.

In der DE-C 34 10 473 ist ein Federungssystem für Kraftfahrzeuge offenbart, das zwischen dem ungefederten und dem gefederten Masseanteil des Fahrzeugs eingebaut ist. Dieses Federsystem besteht aus einer mechanischen, pneumatischen oder hydraulischen Tragfeder mit positiver relativ großer Federrate, aus einer dazu parallel angeordneten magnetisch ausgebildeten und nach Art einer Totpunktfeder wirkenden nichtlinearen Korrekturfeder mit negativer Federrate in einem Nulldurchgang ihrer Federkennlinie und ggf. aus einem ebenfalls parallel angeordnetem Stoßdämpfer. Die Korrekturfeder besitzt einen jeweils mit Permanentmagneten bestückte Teil auf konzentrisch angeordneten Ringscheiben, von denen der eine Teil mit dem gefederten und der andere Teil mit dem ungefederten Masseanteil zur Bildung einer Drehfeder verbunden ist. Die Drehfeder ist mittels einer Einrichtung stufenweise zur Niveauregulierung und Federkomfortverbesserung einstellbar. Die Magnetisierungsachsen der Permanentmagnete sind parallel zur Bewegungsrichtung der Korrekturfeder angeordnet, woraus sich eine nichtlineare Kennlinie ergibt.

Als nachteilig ist bei den oben genannten Maßnahmen deren aufwendiger Aufbau und fehlende Flexibilität im Hinblick auf die Anpassung an unterschiedliche Fahr- bzw. Laufwerke anzusehen. Der Einsatz derartiger Verbesserungsmaßnahmen für Fahr- bzw. Laufwerke ist auch aus Kostengründen bisher auf Spezialfahrzeuge, wie beispielsweise Rennfahrzeuge begrenzt, und eignet sich nicht für den serienmäßigen Einbau bei Personenkraftwagen.

Außerdem tragen derartige Fahrzeugfahr- bzw. -laufwerke verschiedenen Belastungszuständen und Fahrsituationen nur diskontinuierlich Rechnung. Die Abstimmung von Federung und Schwingungsdämpfer stellt bis heute nur einen unzureichenden Kompromiß zwischen Fahrkomfort und Fahrsicherheit dar.

In der US-A 3 006 656 ist eine nach dem Prinzip einer Pulverkupplung arbeitenden Anordnung offenbart. Aufgrund von elektromagnetischen Haltekräften wird hier eine Bremskraft erzeugt, die zu Dämpfungszwecken ausgenutzt wird, wobei eine festgelegter nicht linearer Kraft-Weg-Zusammenhang existiert.

Bekannt ist weiterhin aus der JP-A-5751039 eine Dämpfungsanordnung für geradlinige Bewegungen, die sich aus einem bewegbaren Körper, einem fest mit diesen verbundenen Magnetfeldgenerator, einem von diesem gebildeten Luftspalt und einer in dem Luftspalt befindlichen stationären Leiterplatte mit Luftschlitzen zusammensetzt. Erzeugt wird das Magnetfeld in dem Luftspalt durch stromdurchflossene Wicklungen oder wenigstens einen Permanentmagneten, und es bildet über die Polschuhe, den Luftspalt und die stationäre Leiterplatte einen geschlossenen Kreis, wobei die Leiterplatte mit ihrer Oberfläche senkrecht und starr zum Magnetfeld im Luftspalt steht. Die Leiterplatte weist zahlreiche Luftschlitze mit Orientierung senkrecht zur Bewegungsrichtung auf, und das Leiterplattenmaterial, welches den jeweiligen Luftschlitz umschließt, bildet sogenannte elektrische Ringleiter. Bei der gemeinsamen Bewegung des Körpers und des Magnetfeldgenerators überstreicht das Magnetfeld die Leiterplatte, und das magnetische Feld durchflutet daher in Bewegungsrichtung bisher unmagnetisierte "elektrische Ringleiter". Gleichzeitig finden beim Austreten von Luftschlitzen aus dem Luftspalt Entmagnetisierungen der "elektrischen Ringleiter" statt, und nach dem Induktionsgesetz wird in den Ringleitern durch die zeitliche Änderung des magnetischen Flusses ein Induktionsstrom erzeugt. Nach der Energiebilanz des Gesamtsystems entspricht die Joule'sche Wärme des Induktionsstroms der Bremsenergie des bewegten Körpers. Diese vorbekannte Anordnung arbeitet somit nach einem Wirkungsprinzip, das von dem elektrischen Induktionsgesetz für die Dämpfung der Bewegung Gebrauch macht.

Der Erfindung liegt die Aufgabe zugrunde eine universell einsetzbare elektromagnetische Abstützanordnung verfügbar zu machen, bei der verschiedene lineare Stützkraft-Kennlinien realisierbar sind.

Die Erfindung zielt weiterhin darauf ab, unter Einsatz einer elektromagnetischen Abstützanordnung flexible Fahrzeugfahr- bzw. -laufwerke verfügbar zu machen, die bei verschiedenen Fahrsituationen eine hohe Fahrsicherheit und einen hohen Fahrkomfort bieten.

Zur Lösung dieser Aufgabe schafft die Erfindung eine elektromagnetische Abstützanordnung aus wenigstens einem Stator mit einer stromdurchflossenen Wicklung und einem Läufer für geradlinige Läuferbewegungen mit wenigstens einem hochpermeablen Läufereisenabschnitt, der zwischen Abschnitten anderer Permeabilität angeordnet ist, wobei der Läufer senkrecht zu der Richtung des von der Wicklung aufgebauten, sich zwischen dem Stator und dem Läufer befindenden Magnetfeldes bewegbar ist, wobei der Erregerstrom für jede Statorwicklung regelbar ist, wobei die auf den Läufer wirkende Reaktionskraft senkrecht zur besagten Magnetfeldrichtung wirkt, und wobei der Verlauf der Grenzflächen zwischen den Abschnitten, an denen die Reaktionskraft angreift, parallel zur Magnetfeldrichtung ist.

Vorzugsweise ist der Erregerstrom abhängig von wenigstens einem Regelparameter änderbar, der die relative Zuordnung von Stator und Läufer betrifft.

In vorteilhafter Weise beansprucht die Erfindung gemäß Anspruch 1 somit eine elektromagnetische Anordnung, bei der der Stator, die sich gegenüberliegenden Pole bildet, wobei der Luftspalt und damit die magnetische Feldlinienlänge konstant bleibt. Die auf den Läufer wirkende Kraft verläuft senkrecht zur Feldlinie und in Richtung der Läuferachse. Diese Kraft bleibt in günstiger Weise linear und konstant und demzufolge liegt eine wesentliche Verbesserung des Energieverbrauchs gegenüber sonstigen vorbekannten Systemen vor.

Nach einer bevorzugten Ausgestaltung der Erfindung ist für die Regelung der Anordnung wenigstens ein Mikroprozessor mit wenigstens einem elektronischen Stellglied vorgesehen, der abhängig von wenigstens einem einen Regelparameter erfassenden Sensorsignal den Erregerstrom in jeder Statorwicklung steuert.

Die Erfindung schafft vorteilhaft auch eine elektromagnetische Abstützanordnung für Radaufhängungen eines Fahrzeugfahr- bzw.-laufwerks. Vorzugsweise ist bei jeder Radaufhängung der Erregerstrom für jede Statorwicklung abhängig von der Geschwindigkeit und/oder der Niveaulage und/oder dem Beschleunigungszustand des Fahrzeugs regelbar, wobei, wie bei der Abstützanordnung allgemein, die Ausgangslage entweder bei einem Läufer mit einem hochpermeablen Läufereisen durch eine zustätzliches parallel bzw. in Reihe geschaltetes Element, oder bei einem Läufer mit wenigstens zwei hochpermeablen Läufereisen und mindestens zwei Statoren durch die Ansteuerung der Statorwicklung einstellbar ist.

Bei der erfindungsgemäßen elektromagnetischen Abstützanordnung verlaufen vorteilhaft die Grenzflächen an der die elektromagnetische Kraft angreift, parallel zur Magnetfeldrichtung. Der Luftspalt bzw die Länge des in Luft verlaufenden Feldlinienweges zwischen den Polen ist von der gewählten Bewegungs- bzw. Hublänge unabhängig. Damit ist auch die magnetische Induktion im Läufereisen von der Bewegungslänge bzw. von dem Hub unabhängig und wird nur von der Amperewindungszahl bestimmt, die das Feld erregt.

Bei gleichen Abmessungen und gleichen Strömen kann mit der erfindungsgemäßen Anordnung im Vergleich zu der eingangs diskutierten vorbekannten Anordnung zu Beginn des Hubes eine größere Induktion im Läufereisen und damit auch eine größere Zugkraft erzielt werden. Ferner existiert bei der erfindungsgemäßen Abstützanordnung vorteilhaft ein Stromverlauf, der wegen seines geringen Maximalwertes pro Bewegungsweg bzw Hub, d.h. wegen eines kleineren Verhältnisses von Effektivwert zum arithmetischen Mittelwert des Stromes, zu einer günstigeren Ausnutzung des Wicklungskupfers führt. Dies ist insbesondere bei der energetischen Betrachtung der Abstützanordnung wichtig.

Aus einer das System dieser elektromagnetischen Abstützanordnung beschreibenden Zugkraftanordnung geht hervor, daß die Kraft bei konstanten Strom von der Lage des Läufers in günstiger Weise unabhängig ist. Hierdurch lassen sich vorteilhaft konstante wegunabhängige Kennlinien im Arbeitsbereich der Anordnung realisieren.

Wesentlich bei der Ausnutzung der Kräfte an den Grenzflächen ist auch die Größe der Permeabilität. Bei der erfindungsgemäßen elektromagnetischen Abstützanordnung ist vorteilhaft auch eine zusätzliche Abstimmung der Verhältnisse über eine Änderung der Permeabilität des Läuferabschnitts möglich.

In vorteilhafterweise liegt bei der erfindungsgemäßen elektromagnetischen Abstützanordnung eine konstante Feldlinienlänge im Luftspaltbereich vor, wobei der Luftspalt eine minimale Größe besitzt. Für dynamische Einsätze der elektromagnetischen Abstützanordnung ist besonders anzumerken, daß eine geringe Wirbelstromdämpfung vorliegt und daß sich durch geeignete Ansteuerung Schwingungssituationen, insbesondere im Resonanzbereichs eines durch die erfindungsgemäße Abstützanordnung abgestützten Systems, insbesondere bei zwei Läufereisen und zwei Statoren durch gegenphasige Läuferansteuerung, wirkungsvoll beherrschen lassen.

Aufgrund der obenerwähnten Ausnutzung von physikalischen Effekten bei der elektromagnetischen Abstützanordnung kann in günstiger Weise eine elektromagnetische Abstützanordnung mit einem Kennfeld geschaffen werden, dessen Wirkungslinien nach wählbaren Parametern willkürlich beeinflußt werden können. Als Beispiele für eine bevorzugte Anwendung sind nicht nur dynamisch belastete Lagerungen anzusehen, bei denen durch eine Regelung mit gegenphasig verlaufender Kennlinie eine hervorragende Niveaustabilisierung realisiert werden kann, sondern auch der Einsatz insbesondere bei Radaufhängungen von Fahrzeugen. Im letztgenannte Fall läßt sich vorteilhaft ein konstruktiv einfach aufgebautes Fahrzeugfahr- bzw. -laufwerk schaffen, das durch Ausnützung der elektromagnetischen Kraftwirkung beliebige Kennlinien bzw. Betriebsverhalten realisieren kann und für den wirtschaftlichen Einbau in der Serienproduktion von Fahrzeugen geeignet ist.

Hierbei kann vorteilhaft die elektromagnetische Abstützanordnung als elekromagnetische Feder ausgenutzt werden, die mit linearer Kennlinie zu arbeiten vermag und mit entsprechender Änderung des Erregerstroms eine lineare Kraft erzeugt, um den sich orthogonal zur Magnetfeldrichtung bewegenden Läufer in die Bohrung des Stators zu ziehen.

Die vorgesehene elektromagnetische Anordnung aus wenigstens einem Stator mit einer stromdurchflossenen Wicklung und einem Läufer mit wenigstens einem Läufereisenabschnitt für geradlinige Läuferbewegungen ermöglicht einen kompakten und leichtgewichtigen Aufbau, der problemlos an die Stelle bisher verwendeter Feder-Dämpfer-Anordnungen in Radaufhängungen treten kann. Die Regelung des Erregerstroms für die Statorwicklung abhängig von der Geschwindigkeit des Fahrzeugs ermöglicht in günstiger Weise eine Anpassung der Federrate an die bei verschiedenen Fahrzeuggeschwindigkeiten erforderlichen optimalen Bedingungen im Hinblick auf die Fahrsicherheit und den Fahrkomfort. Die elektromagnetische Anordnung gemäß der Erfindung vermag das Hubschwing-, Nickschwing- und Wankschwingverhalten von Fahrzeugen günstig zu beeinflussen.

Für die Anregung von Fahrzeugschwingungen sind aus dem Fahrbetrieb herrührende Aufbaubewegungen verantwortlich. Dabei wird das Schwingungsverhalten durch die Abstimmung zwischen Feder und Schwingungsdämpfer beeinflußt. Nach einer bevorzugten Ausgestaltung der Erfindung weist jede Radaufhängung für die Dämpfung eine Regelung abhängig von der Geschwindigkeit des Läufers relativ zum Stator auf. Hierdurch ist es in vorteilhafterweise möglich, eine beliebige Dämpfungscharakteristik zu erzeugen und optimale Abstimmungen von Federung und Schwingungsdämpfer für alle Fahrsituationen zu erreichen.

Für die Durchführung der Regelvorgänge sind ein Sensor für die Geschwindigkeit des Fahrzeugs sowie für jede Radaufhängung ein Sensor für die Läufergeschwindigkeit vorgesehen. Damit ist es möglich, den an jeder Radaufhängung erforderlichen Bedingungen hinsichtlich Komfort und Fahrsicherheit abhängig von der Geschwindigkeit des Fahrzeugs Rechnung zu tragen.

Gemäß einer bevorzugten Weiterbildung der Erfindung weist jede Radaufhängung für die Niveaulage des Fahrzeugs eine Regelung abhängig von einem Signal eines Wegsensors auf. Damit wird es in vorteilhafter Weise möglich, die Niveaulage des Fahrzeugs unabhängig vom Beladungszustand des Fahrzeugs zu regeln. Außerdem können die Niveaulage, die Federrate und die Dämpfungcharakteristik jeder Radaufhängung des Fahrzeugfahr- bzw. -laufwerks abhängig von der Geschwindigkeit des Fahrzeugs geregelt werden, wobei bei Kurvenfahrten, Beschleunigungs- und Bremsvorgängen, einen belastungsabhängige Korrektur und damit eine Niveaustabilisierung erreicht wird. Hierzu ist vorteilhaft wenigstens ein zentraler Beschleunigungssensor vorgesehen, der die Beschleunigungskräfte von Anfahr- und Bremsvorgängen und die Zentripetal kräfte während einer Kurvenfahrt erfaßt.

Für die Regelung der Anordnung ist in günstiger Weise wenigstens ein Mikroprozessor mit wenigstens einem elektronischen Stellglied vorgesehen, der abhängig von den Sensorsignalen den Erregerstrom in jeder Statorwicklung steuert. Wenn dieser Mikroprozessor beispielsweise Signale von dem Beschleunigungssensor erhält, können die stärker belasteten Federbeine von Radaufhängungen elektromagnetisch unterstützt werden. Beim Anfahr- bzw. Beschleunigungsvorgang lassen sich die Steifigkeiten der hinteren bzw. der vorderen Federbeine durch stärkere Federkennlinien der elektromagnetischen Federn erhöhen. In ähnlicher Weise läßt sich auch die Rollenneigung eines Fahrzeugs während einer Kurvenfahrt verringern, indem die äußeren Federbeine verstärkt und die Steifigkeit der inneren Federbeine verringert wird. Es ist sogar möglich, daß Fahrzeug in Kurven der Fliehkraft entgegenzuneigen.

In vorteilhafter Weise liegen an jedem Mikroprozessor die Signale der verschiedenen Sensoren permanent an und werden zyklisch abgerufen. Die Ausgangssignale des Mikroprozessors stellen eine Funktion der Sensorsignale dar und kennzeichnen den Sollwert des Erregerstroms für die Statorwicklung. Sie liegen in digitaler Form vor und werden in einem D/A-Wandler in analoge Signale umgesetzt. Ein Stellglied (Verstärker) verstärkt die eingehenden Ströme auf den Sollwert des magnetfelderzeugenden Stroms.

In seiner Wirkungsweise folgt der Mikroprozessor einer Rechenvorschrift, die aus den spezifischen Bedürfnissen des Anwenders resultiert und von jedem Fachmann erstellt werden kann. In dieser Rechenvorschrift lassen sich alle Kraft- Wege-Abhängigkeiten zwischen Stator und Läufer realisieren, wobei diese Kraft-Wege-Abhängigkeiten von äußeren Parametern beeinflußbar gemacht werden können, die mittels Sensoren dem Mikroprozessor mitgeteilt werden.

Nach einer bevorzugten Ausgestaltung der Erfindung ist der Läufer zylinderförmig ausgebildet und weist wenigstens einem hochpermeables Läufereisenabschnitt auf, der zwischen nicht magnetischen Kunststoffabschnitten des Läufers angeordnet ist, während der Stator einen Eisenkern besitzt, der zur Bildung von gegenüberliegenden Polschuhen durch eine Bohrung für den Läufer unterbrochen ist, deren Durchmesser größer als der Kernquerschnitt im Bereich der Bohrung ist, wobei die Eisenkerndicke im Bereich der Bohrung gleich der Länge jedes Läufereisenabschnitts ist. Für die Führung des Läufers sind vor und hinter der Bohrung Lagerbuchsen aus Kunststoff an dem Stator befestigt. Hierdurch ergibt sich ein besonders kompakter Aufbau für die elektromagnetische Anordnung.

Vorzugsweise besitzt der Läufer mindestens einen weiteren hochpermeablen Läufereisenabschnitt und es ist mindestens ein weiterer zugeordneter Stator vorgesehen. Hierdurch ergeben sich weitere Regelungsmöglichkeiten, da sowohl Zug- als auch Druckkräfte übertragen werden können. In Verbindung mit der gekoppelten Regelung der Statorwicklungen kann in vorteilhafter Weise bei höheren Geschwindigkeiten eine niedrigere Niveaulage und eine höhere Federsteifigkeit erreicht werden.

Zur Vermeidung eines zu weiten Ausgang- bzw. Einfahrens des Läufers ist ferner ein Zug- und ein Druckanschlag vorgesehen.

Weitere Einzelheiten, Merkmale und Vorteile der Erfindung sind dem anschließenden Beschreibungsteil zu entnehmen, in dem die Erfindung unter Bezugnahme auf die beigefügten Zeichnungen näher erläutert wird. Es zeigen:
- Figur 1: eine perspektivische Ansicht einer einfachen elektromagnetischen Abstützanordnung; und
- Figur 2: eine schematische Darstellung eines Kraftfahrzeugfederbeins mit einer Regelung der Niveaulage, Federrate und Dämpfungscharakteristik abhängig von der Geschwindigkeit des Kraftfahrzeugs.

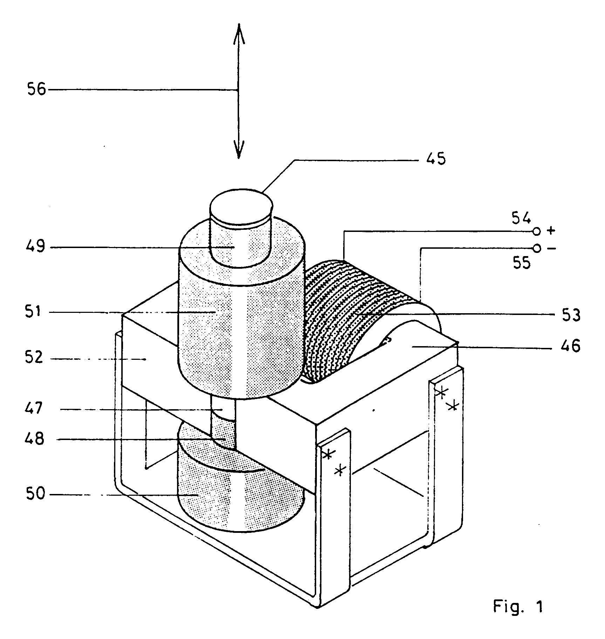

Figur 1 zeigt eine Ausbildungsform einer elektromagnetischen Anordnung, bestehend aus einem für geradlinige Läuferbewegungen vorgesehenen zylinderförmigen Läufer 45 und einem Stator 46. Die dargestellte Anordnung dient beispielsweise zur Abstützung einer nicht dargestellten stationären Maschine, wobei sich der Stator 46 über eine Ständereinrichtung mit Bodenplatte an einem nicht dargestellten Fundament oder dergleichen abstützt und der Läufer 45 an seinem oberen Ende mit einer nicht dargestellten Auflageeinrichtung einer Maschine verbunden ist. Der Läufer 45 weist ein Läufereisen 47 auf, das zwischen nichtmagnetischen Kunststoffabschnitten 48 und 49 befestigt ist. Geführt wird der Läufer 45 in zwei Lagerbuchsen 50 und 51, die aus Kunststoff bestehen und an dem Eisenkern des Stators 46 befestigt sind. Bei Ausbildung der Anordung mit einem Läufereisen 47 ist ferner ein nichtdargestelltes Element vorgesehen, das die Ausgangslage des Läufers 45definiert, z. B. eine Tragfeder. Wenn mindestens zwei Läufereisen und mindestens zwei Statoren vorgesehen sind, kann die Anordnung selbst die Ausgangslage definieren.

Der Stator 46 besteht aus einem üblichen Transformatoreisenkern, der zur Bildung von gegenüberliegenden Polschuhen durch eine senkrechte Bohrung für den Läufer 45 unterbrochen ist. Der Durchmesser der Bohrung ist größer als der Kernquerschnitt im Bereich der Bohrung, und die Eisenkerndicke im Bereich der Bohrung ist gleich der Länge des Läufereisens 47. Der der Bohrung für den Läufer gegenüberliegende Abschnitt des annähernd rechteckförmigen Eisenkerns 52 ist mit einer Wicklung 53 versehen, deren Wicklungsenden 54 und 55 zur Einspeisung von Erregerstrom nach außen geführt sind. Die Bewegungsrichtung des Läufers 45 ist durch einen Pfeil 56 angegeben.

Die elektromagnetische Anordnung aus Läufer 45 und Stator 46 kann allgemein als elektrische Maschine für geradlinige Läuferbewegungen oder als Linearmotor bezeichnet werden. Bei der in Figur 1 dargestellten Ausbildungsform der Anordnung befindet sich das Läufereisen 47 im unbelasteten Zustand und bei eingeschalteten Wicklungsstrom vollständig mit geringem Luftspalt zwischen den beiden Polschuhen, die durch die sich gegenüberliegenden Seiten der Läuferbohrung gebildet werden. Wenn nun eine äußere Kraft auf den Läufer 45 in Richtung des möglichen Läuferfreiheitsgrades wirkt, bildet das mit annähernd konstanter Feldlinienlänge gebildete Magnetfeld des Stators 46 eine Reaktionskraft, die der äußeren Kraft entgegenwirkt und bestrebt ist, das Läufereisen 47 zwischen den Polschuhen zu halten. Die magnetische Reaktionskraft ist rechnerisch wegunabhängig. Durch die in der Praxis auftretenden Inhomogenitäten des Magnetfeldes nehmen jedoch die Reaktionskräfte mit dem Federweg zu. Da für die Stärke der Reaktionskraft auch die Amperewindungszahl der Wicklung maßgebend ist, kann die Steigung der Kraft-Weg-Kennlinie der Anordnung durch die Stromstärke geregelt werden.

Die Wirkungslinie der Reaktionskraft des Magnetfeldes auf das Läufereisen ist immer in Achsrichtung der Polschuhbohrung gerichtet. Demgemäß hat der Läufereisenabschnitt bei eingeschalteten Wicklungsstrom das Bestreben, ausgeglichen zwischen den Polschuhen zu ruhen. Die Reaktionskraft des Magnetfeldes ist unabhängig von der Polung des Erregerstroms.

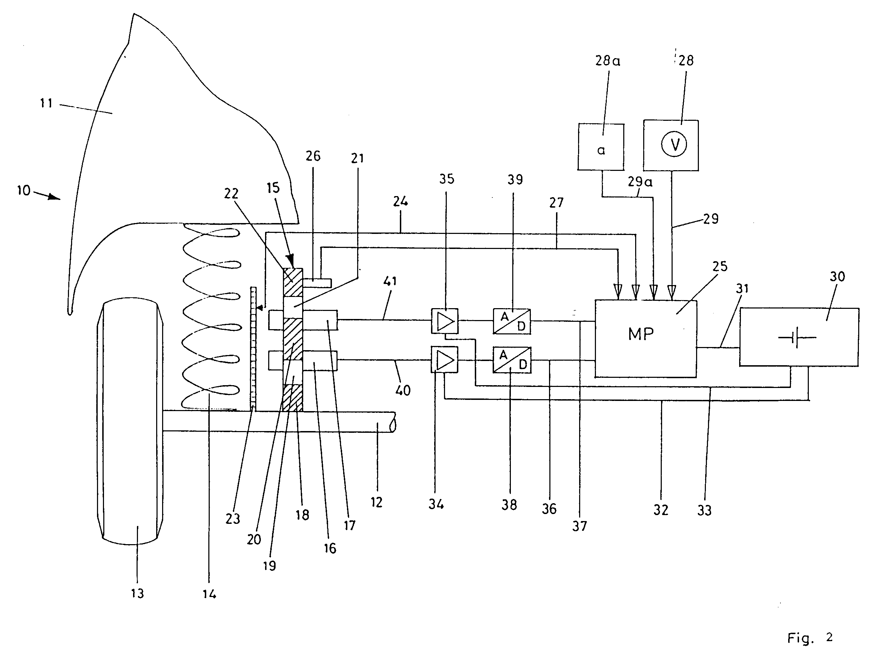

Figur 2 zeigt eine schematische Darstellung der Ausbildung einer Radaufhängung 10 eines Personenkraftwagen-Fahrwerks. Von dem Personenkraftwagen ist nur ein Teil der Karosserie dargestellt, der mit 11 bezeichnet ist. An einem Federbeinläufer 12 ist in üblicher Weise ein Rad 13 montiert, das sich zusammen mit dem Federbeinläufer 12 in Richtung auf die Karosserie 11 und von dieser weg zu bewegen vermag.

Zwischen dem Federbeinläufer 12 und der Karosserie 11 ist eine konventionelle Schraubenfeder 14 parallel zu der erfindungsgemäßen Anordnung montiert, die für die Aufnahme der Radlastleergewichtskräfte vorgesehen ist. Die Schraubenfeder 14 kann bei Einsatz der erfindungsgen Abstützanordnung vorteilhaft entsprechend geringer dimensioniert werden, wodurch auch eine Gewichtsersparnis erreicht wird.

Parallel zu dieser Schraubenfeder 14 ist eine elektromagnetische Anordnung mit einem Läufer 15 und zwei übereinander angeordneten Statoren 16 und 17 vorgesehen. Der Läufer 15 ist in nicht dargestellter Weise an dem Federbeinläufer 12 befestigt und ragt von diesem senkrecht nach oben durch die Statoren 16 und 17, wobei das obere Ende des Läufers 15 frei liegt. Die Statoren 16 und 17 sind in nicht dargestellter Weise an der Karosserie 11 des Kraftfahrzeugs befestigt. Der Läufer 15 vermag sich geradlinig durch die Statoren 16 und 17 zu bewegen.

Der Läufer 15 ist zylinderförmig ausgebildet und besteht von unten nach oben aus einem nichtmagnetischen Kunststoffabschnitt 18, einem hochpermeablen Läufereisen 19, einem nichtmagnetischen Kunststoffabschnitt 20, einem hochpermeablen Läufereisenabschnitt 21 sowie einem abschließenden nichtmagnetischen Kunststoffabschnitt 22.

Auf dem Federbeinläufer 12 ist ferner ein Wegsensor 23 befestigt, der über eine Leitung 24 ein Niveausignal an einen Mikroprozessor 25 abgibt, der beabstandet an der Karosserie 11 befestigt ist.

Ein Sensor 26 für die Erfassung der Geschwindigkeit des Läufers 15 ist im oberen Bereich des Läufers 15 angeordnet und liefert über eine Leitung 27 eine Läufergeschwindigkeitssignal an den Mikroprozessor 25. Die Geschwindigkeit des Fahrzeugs wird von einem Geschwindigkeitssensor 28 erfaßt und über eine Signallei tung 29 auf den Mikroprozessor 25 übertragen. Dargestellt ist ferner ein zentraler Beschleunigungssensor 28a, dessen Signal über eine Leitung 29a an dem Mikroprozessor 25 liegt.

Für die Stromversorgung ist eine Batterie 30 vorgesehen, die über eine Leitung 31 und der Karosseriemasse mit dem Mikroprozessor 25 und über Leitungen 32 und 33 mit Verstärkern 34 und 35 verbunden ist.

Der Mikroprozessor 25 liefert über Steuerleitungen 36 und 37 jeweils digitale Steuersignale an einen D/A-Wandler 38 bzw. 39. Der Ausgang der Wandler 38 bzw. 39 steuert die Verstärker 34 bzw. 35. Der Verstärker 34 liefert über die Leitung 40 einen Erregerstrom an die Wicklung des Stators 16, wobei vorteilhaft die Größe des Erregerstroms durch das vom Mikroprozessor stammende am Verstärker analog vorliegende Steuersignal bestimmt ist. In entsprechender Weise liegt über eine Leitung 41 ein Erregerstrom von dem Verstärker 35 an der Wicklung des Stators 17.

Die in Figur 2 gezeigte Anordnung besitzt einen Läufer 15 mit zwei Läufereisenabschnitten 19 und 21, die von einem nichtmagnetischen Kunststoffabschnitt getrennt sind. Jedem Läufereisen ist ein Stator 16 bzw. 17 zugeordnet. Der Läufer 15 kann somit durch die zweite magnetische Reaktionskraft an dem Stator 17 ohne äußere mechanische Kraft aus dem Luftspalt des Stators geführt werden. Je nach Erregung der jeweiligen Statorwindungen kann damit der Läufer 15 in beliebiger Stellung gehalten werden.

Die Wirkungsweise der elektromagnetischen Anordnung als regelbares Federbein wird nachfolgend näher erläutert. Wenn sich das Fahrzeug in Ruhe befindet, ist nur die Schraubenfeder 14 wirksam, welche die Radlastleergewichtskräfte aufnimmt. Ein nicht dargestellter Zug- und Druckanschlag verhindert das zu weite Aus- bzw. Einfedern. Wird nun die elektromagnetische Anordnung aktiviert, addieren sich die Federraten der Schraubenfeder 14 und der parallel geschalteten elektromagnetischen Feder, und die beiden Reaktionskräfte addieren sich.

Der Mikroprozessor 25 regelt nun je nach Belastungszustand bzw. Beladungszustand des Personenkraftwagens und der Fahrsituation den zusätzlichen elektromagnetischen Anteil, wobei die Ausgangssignale des Geschwindigkeitssensors 28, des Wegsensors 23, des Läufergeschwindigkeitssensors 26 sowie des Beschleunigungssensors 28a nebst Leitung 29a die jeweilige Betriebssituation charakterisieren und ständig an dem Mikroprozessor 25 anliegen.

Entsprechend einer Rechenvorschrift, die den jeweiligen Bedürfnissen in einer dem Fachmann geläufigen Weise angepaßt werden kann, ruft der Mikroprozessor 25 die Informationen der Sensoren an seinen Eingängen zyklisch ab und verarbeitet diese. Die digitalen Ausgangssignale des Mikroprozessors 25 werden in analoge Signale umgesetzt und kennzeichnen den Sollwert des Magnetfeld erzeugenden Stroms für den betreffenden Stator.

Für die Festlegung des jeweiligen Sollwertes übertragen bei einem vierrädrigen Fahrzeug vier Wegaufnehmer 23 den Niveauabstand zwischen Karosserie 11 und dem Federbeinläufer 12. Durch Erfassung der Läufergeschwindigkeit lassen sich auch durch Regelung des Stromflusses zu den einzelnen Statorwicklungen Dämpfungswerte bei den jeweiligen Radaufhängungen individuell regeln. Die Federkennlinien der elektromagnetischen Feder können so der Belastungssituation und der Dämpfungsanforderung in Bruchteilen von Sekunden angepaßt werden.

Die Beschleunigungskräfte beim Anfahren und Bremsen und die Zentripetalkräfte während Kurvenfahrten werden von dem zentralen Beschleunigungssensor erfaßt, wobei die stärker belasteten Radaufhängungen durch entsprechende Steuerung seitens des Mikroprozessors elektromagnetisch unterstützt werden. Außerdem vermag der Mikroprozessor bei Anfahr- bzw. Beschleunigungsvorgängen die Steifigkeit der hinteren bzw. der vorderen Radaufhängungen durch steilere Federkennlinien der elektromagnetischen Federn zu erhöhen. In ähnlicher Weise wird die Rollneigung eines Fahrzeugs während einer Kurvenfahrt verringert, indem die äußeren Radaufhängungen verstärkt und die Steifigkeit der inneren Radaufhängungen verringert wird.

Der Läufer 15 mit seinen beiden Läufereisenabschnitten 19 und 21 ermöglicht dabei sowohl die Übertragung von Zug- wie auch Druckkräften. In Verbindung mit der Steuerung durch den Mikroprozessor 25, der beide Statorwicklungen gekoppelt regelt, kann in vorteilhafter Weise eine geschwindigkeitsbedingt niedrige Niveaulage des Fahrzeugs und eine höhere Federsteifigkeit erreicht werden.

Mit dem neuen Fahrzeugfahr- bzw. -laufwerk lassen sich somit in vorteilhafter Weise nicht nur die Niveaulage des Fahrzeugs unabhängig vom Beladungszustand regeln, sondern es erfolgt auch eine Regelung der Niveaulage, Federrate und Dämpfungscharakteristik abhängig von der Geschwindigkeit des Fahrzeugs, wobei bei Kurvenfahrten und positiven und negativen Beschleunigungen für jede einzelne Radaufhängung die Federrate und Dämpfungscharakteristik belastungsabhängig korrigiert und dadurch eine Niveaustabilisierung erreicht wird.

Bei dem neuen Fahrzeugfahr- bzw. -laufwerk übernimmt die aus wirtschaftlichen Gründen notwendige parallel geschaltete mechanische Tragfeder den größten Teil der Federkräfte, während der zusätzlich zu regelnde Bereich der Feder- und Dämpfungskräfte in vorteilhafter Weise von der elektromagnetischen Anordnung abgedeckt wird.

Die Anwendung der elektromagnetischen Anordnung ist jedoch nicht auf den Fahrzeugbereich begrenzt, sondern kann im gesamten Maschinenbau in den Fällen zur Anwendung gelangen, in denen mit einfachen Mitteln eine Niveaustabilisierung erreicht und die Folgen von lageverändernden Krafteinwirkungen begrenzt werden sollen.

## Patentansprüche

1. Elektromagnetische Abstützanordnung, bestehend aus wenigstens einem Stator (16, 17; 46) mit einer stromdurchflossenen Wicklung (53), wobei der Erregerstrom für jede Statorwicklung regelbar ist, und einem Läufer (15, 45) für geradlinige Läuferbewegungen mit wenigstens einem hochpermeablen Läufereisenabschnitt (19, 21; 47), dadurch gekennzeichnet, daß der Läufereisenabschnitt (19, 21; 47) zwischen Abschnitten anderer Permeabilität angeordnet ist, der Läufer senkrecht zu der Richtung des von der Wicklung (53) aufgebauten, sich zwischen dem Stator und dem Läufer befindenden Magnetfelds bewegbar ist, die auf den Läufer (15, 45) wirkende Reaktionskraft senkrecht zur besagten Magnetfeldrichtung wirkt, und der Verlauf der Grenzflächen zwischen den Abschnitten, an denen die Reaktionskraft angreift, parallel zur Magnetfeldrichtung ist.

2. Abstützanordnung nach Anspruch 1,
dadurch gekennzeichnet,
daß der Erregerstrom abhängig von wenigstens einem Regelparameter änderbar ist, der die relative Zuordnung von Stator und Läufer betrifft.

3. Abstützanordnung nach Anspruch 2,
dadurch gekennzeichnet,
daß als Regelparameter eine Stellung des Stators (16, 17; 46) relativ zum Läufer (15, 45) vorgesehen ist.

4. Abstützanordnung nach Anspruch 2,
dadurch gekennzeichnet,
daß als Regelparameter die Bewegungsgeschwindigkeit des Läufers (15, 45) relativ zum Stator (16, 17; 46) vorgesehen ist.

5. Abstützanordnung nach Anspruch 2,
dadurch gekennzeichnet,
daß als Regelparameter die Beschleunigung des Läufers (15, 45) relativ zum Stator (16, 17; 46) vorgesehen ist.

6. Abstützanordnung nach Anspruch 2,
dadurch gekennzeichnet,
daß für die Regelung der Anordung wenigstens ein Mikroprozessor (25) mit wenigstens einem elektronischen Stellglied (34, 35) vorgesehen ist, der abhängig von wenigstens einem einen Regelparameter erfassenden Sensorsignal den Erregerstrom in jeder Statorwicklung steuert.

7. Abstützanordnung nach Anspruch 6,
dadurch gekennzeichnet,
daß für die Steuersignale jedes Mikroprozessors (25) wenigstens ein D/A-Wandler (38, 39) vorgesehen ist, dessen analoger Ausgang an einem Verstärker (34, 35) für den Erregerstrom liegt.

8. Abstützanordnung nach einem der vorangehenden Ansprüche,
dadurch gekennzeichnet,
daß der Läufer (15, 45) zylinderförmig ausgebildet ist, und daß jeder hochpermeable Läufereisenabschnitt (19, 21; 47) zwischen nichtmagnetischen Kunststoffabschnitten (18, 20, 22; 48, 49) des Läufers (15, 45) angeordnet ist.

9. Abstützanordnung nach Anspruch 8,
dadurch gekennzeichnet,
daß der Stator einen Eisenkern (52) aufweist, der zur Bildung von gegenüberliegenden Polschuhen durch eine Bohrung für den Läufer (15, 45) unterbrochen ist, deren Durchmesser größer als der Kernquerschnitt im Bereich der Bohrung ist, wobei die Eisenkerndicke im Bereich der Bohrung kleiner als die Länge (1) jedes Läufereisenabschnitts (19, 21; 47) ist.

10. Abstützanordnung nach Anspruch 9,
dadurch gekennzeichnet,
daß für die Führung jedes Läufers (15, 45) vor und hinter der Bohrung Lagerbuchsen (50, 51) aus Kunststoff an dem Stator (46) befestigt sind, und daß für jeden Läufer (15, 45) ein Zug- und ein Druckanschlag vorgesehen sind.

11. Elektromagnetische Abstützanordnung nach einem der vorangehenden Ansprüche für Radaufhängungen eines Fahrzeugfahr- bzw. -laufwerks, die jeweils wenigstens ein mit einer Federung und einer Dämpfung versehenes Laufrad aufweisen.

12. Elektromagnetische Abstützanordnung nach einem der vorangehenden Ansprüche 1 bis 10,
für Radaufhängungen eines Fahrzeugfahr- bzw. -aufwerks, wobei der Läufer (15) mindestens zwei hochpermeable Läufereisenabschnitte (20, 21) aufweist, und wobei mindestens zwei zugeordnete Statoren (16, 17) vorgesehen sind.

13. Abstützanordnung nach Anspruch 11 oder 12
dadurch gekennzeichnet,
daß bei jeder Radaufhängung der Erregerstrom für jede Statorwicklung (53) abhängig von der Geschwindigkeit und/oder der Niveaulage und/oder dem Beschleunigungszustand des Fahrzeugs regelbar ist.

14. Abstützanordnung nach Anspruch 13,
dadurch gekennzeichnet,
daß für die geschwindigkeitsabhängige Regelung ein Geschwindigkeitssensor (28), für die Niveaulage des Fahrzeugs wenigstens ein Wegsensor (23) und für die belastungsabhängige Regelung der Niveaulage des Fahrzeugs bei Kurvenfahrt sowie positiven und negativen Beschleunigungsvorgängen mindestens ein zentraler Beschleunigungssensor (28a) vorgesehen ist.

## Claims

1. Electromagnetic support arrangement comprising at least one stator (16, 17; 46) having a current-excited winding (53) the exciting current being controllable for each stator and a runner (15,45) for rectilinear runner movements having at least one high-permeability runner iron section (19, 21; 47),
characterized in
that the runner iron section (19, 21; 47) is arranged between sections of another permeability, that the runner is moveable perpendicularly to the direction of the magnetic field built up between the stator and the runner by the winding (53), that the reaction force acting on said runner (15, 45) acts perpendicular to said direction of said magnetic field, and that the course of interfaces between portions at which said reaction force acts, is parallel to the direction of said magnetic field.

2. Support arrangement according to claim 1,
characterized in
that the exciting current is variable in dependence upon at least one control parameter which concerns the relative association of stator and runner.

3. Support arrangement according to claim 2,
characterized in
that as control parameter a position of the stator (16, 17; 46) relatively to the runner (15, 45) is provided.

4. Support arrangement according to claim 2,
characterized in
that as control parameter the movement velocity of the runner (15, 45) relatively to the stator (16, 17; 46) is provided.

5. Support arrangement according to claim 2,
characterized in
that as control parameter the acceleration of the runner (15, 45) relatively to the stator (16, 17; 46) is provided.

6. Support arrangement according to claim 2,
characterized in
that for the control of the arrangement at least one microprocessor (25) is provided which comprises at least one electronic control element (34, 35) which in dependence upon at least one sensor signal detecting a control parameter controls the exciting current in each stator winding.

7. Support arrangement according to claim 6,
characterized in
that for the control signals of each microprocessor (25) at least one D/A converter (38, 39) is provided of which the analog output is applied to an amplifier (34, 35) for the exciting current.

8. Support arrangement according to a preceding claim,
characterized in
that the runner (15, 45) is made cylindrical and that each high-permeability runner iron section (19, 21; 47) is arranged between nonmagnetic plastic sections (18, 20, 22; 48, 49) of the runner (15, 45).

9. Support arrangement according to claim 8,
characterized in
that the stator comprises an iron core (52) which for forming opposite pole shoes is interrupted by a bore for the runner (15, 45) having a diameter which is greater than the core cross-section in the region of the bore, the iron core thickness in the region of the bore being less than the length (1) of each runner iron section (19, 21; 47).

10. Support arrangement according to claim 9,
characterized in
for guiding each runner (15, 45) in front of and behind the bore bearing bushes (50, 51) of plastic are mounted on the stator (46) and that for each runner (15, 45) a pulling and pressure stop is provided.

11. Electromagnetic support arrangement according to a preceding claim,
for wheel suspensions of a motor vehicle chassis or running gear which each comprise at least one running wheel provided with a suspension means and a damping means.

12. Electromagnetic support arrangement according to anyone of the preceding claims 1 to 10,
for wheel suspensions of a vehicle chassis or running gear, the runner (15) having at least two high-permeability runner iron sections (20, 21) and at least two associated stators (16, 17) being provided.

13. Support arrangement according to claim 11 or 12,
characterized in
that in each wheel suspension the exciting current for each stator winding (53) is controllable in dependence upon the speed and/or level position and/or the acceleration condition of the vehicle.

14. Support arrangement according to claim 13,
characterized in
that there are provided for the speed-dependent control a speed sensor (28), for the level position of the vehicle a displacement sensor (23) and for the load-dependent control of the level position of the vehicle in curves and positive and negative acceleration processes at least one central acceleration sensor (28a).

## Revendications

1. Support électromagnétique, constitué d'au moins un stator (16, 17 ; 46) comportant un enroulement (53) dans lequel passe un courant, le courant inducteur de chaque enroulement de stator étant réglable, et un induit (15, 45) à déplacements linéaires qui comporte une section d'induit en fer (19, 21 ; 47) à perméabilité élevée, caractérisé en ce que la section d'induit en fer (19, 21; 47) est disposée entre des sections ayant une autre perméabilité, en ce que l'induit est agencé de façon à pouvoir être déplacé perpendiculairement à la direction du champ magnétique créé par l'enroulement (53) et passant entre le stator et l'induit, en ce que la force de réaction agissant sur l'induit (15, 45) agit perpendiculairement à ladite direction du champ magnétique et en ce que l'orientation des surfaces séparant les sections, sur lesquelles agit la force de réaction, est parallèle à la direction du champ magnétique.

2. Support suivant la revendication 1 caractérisé en ce que le courant inducteur peut être modifié en fonction d'au moins un paramètre de réglage qui concerne la manière relative dont le stator et l'induit sont associés.

3. Support suivant la revendication 2, caractérisé en ce qu'une position du stator (16, 17 : 46) vis-à-vis de l'induit (15, 45) est prévue comme paramètre de réglage.

4. Support suivant la revendication 2, caractérisé en ce que la vitesse de déplacement de l'induit (15, 45) vis-à-vis du stator (16, 17 : 46) est prévue comme paramètre de réglage.

5. Support suivant la revendication 2, caractérisé en ce que l'accélération de l'induit (15, 45) vis-à-vis du stator (16, 17 : 46) est prévue comme paramètre de réglage.

6. Support suivant la revendication 2, caractérisé en ce que, pour le réglage du dispositif, il est prévu au moins un microprocesseur (25) comportant au moins un organe électronique de réglage (34, 35) qui commande le courant inducteur dans chaque enroulement de stator en fonction d'au moins un signal de capteur détectant un paramètre de réglage.

7. Support suivant la revendication 6, caractérisé en ce que, pour les signaux de commande de chaque microprocesseur (25), il est prévu au moins un convertisseur numérique/analogique (38, 39) dont la sortie analogique est appliquée à un amplificateur (34, 35) servant pour le courant inducteur.

8. Support suivant l'une des revendications précédentes, caractérisé en ce que l'induit (15, 45) est en forme de cylindre et en ce que chaque section d'induit en fer (19, 21 ; 47) à perméabilité élevée est disposée entre des sections en matière plastique (18, 20, 22 : 48, 49), non magnétiques, de l'induit (15, 45).

9. Support suivant la revendication 8, caractérisé en ce que le stator comprend une âme en fer (52) qui, pour former des pièces polaires se faisant face, est interrompue par un alésage, destiné à l'induit (15, 45), dont l'aire circulaire est supérieure à la section transversale de l'âme dans la zone de l'alésage, tandis que, dans cette zone de l'alésage, l'épaisseur de l'âme en fer est inférieure à la longueur (I) de chaque section d'induit en fer (19, 21; 47).

10. Support suivant la revendication 9, caractérisé en ce que des coussinets (50, 51) en matière plastique sont fixés sur le stator (46), devant et derrière l'alésage, pour le guidage de chaque induit (15, 45) et en ce qu'une butée de traction et une butée de compression sont prévues pour chaque induit (15, 45).

11. Support électromagnétique suivant l'une des revendications précédentes, pour suspensions de roue d'un train de déplacement ou train de roulement de véhicule automobile qui comprennent chacune au moins une roue pourvue d'une suspension et d'un amortisseur.

12. Support électromagnétique suivant l'une des revendications précédentes 1 à 10, pour suspensions de roue d'un train de déplacement ou train de roulement de véhicule automobile, dans lequel l'induit (15) comprend au moins deux sections d'induit en fer (20, 21) à perméabilité élevée et dans lequel il est prévu au moins deux stators (16, 17) associés.

13. Support suivant l'une des revendications 11 et 12, caractérisé en ce que, pour chaque suspension de roue, le courant inducteur utilisé pour chaque enroulement de stator (53) est réglable en fonction de la vitesse et/ou de la hauteur et/ou de l'état d'accélération du véhicule.

14. Support suivant la revendication 13, caractérisé en ce qu'il est prévu un capteur de vitesse (28) pour le réglage dépendant de la vitesse, au moins un capteur de course (23) pour la hauteur du véhicule et au moins un capteur central d'accélération (28a) pour le réglage de la hauteur du véhicule en fonction de la charge, en conduite en virage, ainsi que lors d'opérations d'accélération positive ou d'accélération négative.
